# EUROPÄISCHE PATENTSCHRIFT

(11) **EP 1 510 406 B1**
(45) Veröffentlichungstag und Bekanntmachung des Hinweises auf die Patenterteilung: **19.10.2011**
(21) Anmeldenummer: 03019499.7
(22) Anmeldetag: 28.08.2003
(51) Int. Cl.: B60R 11/02

(54) **Fahrzeug-Bildschirmeinrichtung**
Display device for a vehicle
Dispositif de visualisation pour véhicule

(43) Veröffentlichungstag der Anmeldung: 02.03.2005
(73) Patentinhaber: Harman Becker Automotive Systems GmbH, 76307 Karlsbad (DE)
(72) Erfinder: Wöhrle, Philipp, 78098 Triberg (DE); Ellis, Dave, New Palestine, IN 46163 (US); Irons, Curt, Greenwool, IN 46162 (US); Latham-Brown, Ernie, Bloomington, IN 47408 (US)
(74) Vertreter: Grünecker, Kinkeldey, Stockmair & Schwanhäusser

(56) Entgegenhaltungen:
- EP-A- 1 197 394
- EP-A- 1 260 412
- DE-A- 10 120 465
- DE-U- 9 407 193
- FR-A- 2 787 403
- PATENT ABSTRACTS OF JAPAN vol. 015, no. 121 (E-1049), 25. März 1991 (1991-03-25) & JP 03 010476 A (MATSUSHITA ELECTRIC IND CO LTD), 18. Januar 1991 (1991-01-18)

## Beschreibung

Die vorliegende Erfindung betrifft eine Fahrzeug-Bildschirmeinrichtung mit einer Bildschirmanordnung und einer Haltevorrichtung gemäß dem Oberbegriff des Anspruchs 1.

Die EP 1 260 412 offenbart eine Bildschirmeinrichtung der eingangs genannten Gattung. Die Vorrichtung beinhaltet ein Bedienteil und eine Fahrerinformationsvorrichtung. Das Bedienteil besteht aus zwei Klappen, wobei sich auf der einen Klappe eine Eingabevorrichtung, wie zum Beispiel eine Tastatur befindet und die andere Klappe ein Display als Anzeigevorrichtung vorsieht. Die Fahrerinformationsvorrichtung befindet sich im Inneren eines Fahrzeugs und weist eine schlitzartige Ausnehmung auf. Zur Nutzung des Bedienteils im Fahrzeug wird eine der beiden Klappen in die schlitzartige Ausnehmung der Fahrerinformationsvorrichtung eingeschoben.

Die DE 101 20 465 offenbart einen Bildschirm für die Anzeige und die Bedienung von Fahrzeugfunktionen in einem Fahrzeug. Dieser Bildschirm wird von einer Halterung ausgenommen, die fest zur Fahrzeuginnenausstattung, zum Beispiel einem Armaturenbrett eines PKW gehört. Die Aufnahme erfolgt durch Einlegen bzw. Einschieben des Bildschirms in eine entsprechende Ausnehmung der Halterung.

Die G94 07 193 offenbart einen KFZ-Sitz mit einem in dessen Kopfstütze integrierten Femsehapparat. Die Kopfstütze ist über ein Halterungsgestänge mit dem Sitz verbunden. Der Femsehapparat wird über einen Bajonettverschluss an dem Halterungsgestänge angebracht und dabei mit elektrischen Leitungen verbunden, welche durch das Gestänge hindurchgeführt sind.

Es sind außerdem Bildschirmeinrichtungen für Fahrzeuge bekannt, die beispielsweise in Sitzlehnen oder Kopfstützen integriert sind. Auch gibt es Taschenfernseher, die mittels Klemmspangen oder Klettverschltissen an Fahrzeugsitzen anbringbar sind. Sowohl die integrierten Bildschirmeinrichtungen als auch die Taschenfernseher sind nur eingeschränkt gut nutzbar.

Der vorliegenden Erfindung liegt die Aufgabe zugrunde, eine Fahrzeug-Bildschirmeinrichtung so zu verbessern, dass diese auf möglichst einfache Weise möglichst vielseitig einsetzbar und trotzdem einfach zu handhaben ist.

Die Aufgabe wird erfindungsgemäß gelöst mit einer Fahrzeug-Bildschirmeinrichtung mit den Merkmalen des Anspruches 1.

Ist die Bildschirmanordnung an der Koppelanordnung der Haltevorrichtung befestigt, ist die Bildschirmanordnung zuverlässig und stabil an der Innenstruktur des Fahrzeugs angebracht. Ein Fahrzeuginsasse kann daher von der Bildschirmanordnung wiedergegebene visuelle Darstellungen betrachten. Weil die Bildschirmanordnung lösbar befestigbar ist, ist sie auch außerhalb des Fahrzeugs eigenständig nutzbar, beispielsweise als Tischfemseher. Die erfindungsgemäße Fahrzeug-Bildschirmeinrichtung ist daher vielseitig einsetzbar. Durch das Abnehmen der Bildschirmanordnung von der bzw. das Befestigen der Bildschirmanordnung an der Koppelanordnung der Haltevorrichtung ist das Handhaben der Fahrzeug-Bildschirmeinrichtung einfach und präzise.

Bevorzugt kann die Bildschirmanordnung über die Haltevorrichtung mit Daten und/oder Energie versorgbar sein. Hierdurch kann die Bildschirmanordnung zusätzlich zu ihren eigenen Informationen externe Daten verarbeiten. Die Bildschirmanordnung kann zudem unabhängig von einer eigenen Energiequelle betrieben werden.

Vorzugsweise kann die Haltevorrichtung über eine stabartige Innenstruktur des Fahrzeugs, vorzugsweise die Streben einer Kopfstütze, mit Daten und/oder Energie versorgbar sein. Somit kann die Haltevorrichtung platzsparend und frei von Behinderungen durch etwaige freigeführte Kabel mit Daten und/oder Energie versorgt werden.

Günstigerweise kann die Bildschirmanordnung an der Haltevorrichtung lösbar einhängbar und eingehängt in eine Koppelstellung an die Halteanordnung heranschwenkbar sein. Auf diese Weise ist die Bildschirmanordnung einfach an der Haltevorrichtung anbringbar.

Besonders günstig kann die Bildschirmanordnung über ein schlitzartiges Auflagegelenk an der Haltevorrichtung einhängbar sein. Mit dem schlitzartigen Auflagegelenk werden die Bildschirmanordnung und die Haltevorrichtung bei einem Einhängen automatisch zueinander positioniert. Das Auflagegelenk kann wenigstens teilweise die Gewichtskraft der Bildschirmanordnung aufnehmen.

Besonders bevorzugt kann im angekoppelten Zustand zwischen der Bildschirmanordnung und der Haltevorrichtung eine lösbare Steckverbindung vorgesehen sein, welche eine Kopplungskraft der Bildschirmanordnung an der Haltevorrichtung bildet. Dadurch ist die Bildschirmanordnung durch einfaches Anstecken an der Haltevorrichtung anbringbar und durch die Kopplungskraft an der Haltevorrichtung fixiert.

In einer weiteren Ausführungsform der Erfindung kann wenigstens ein Führungselement an der Bildschirmanordnung und/oder der Haltevorrichtung vorgesehen sein, mit welchem das Ankoppeln der Bildschirmanordnung an die Haltevorrichtung wenigstens abschnittsweise gerichtet führbar ist. Dies bringt die Bildschirmanordnung und die Haltevorrichtung beim Ankoppeln wenigstens abschnittsweise in eine definierte Relativlage zueinander. Insbesondere wird hierdurch das Stecken der Steckverbindung erleichtert.

Besonders vorteilhaft kann die Bildschirmanordnung und/oder die Haltevorrichtung eine Lösevorrichtung aufweisen, mit welcher die Bildschirmanordnung aus ihrer Koppelstellung wenigstens abschnittsweise lösbar ist. Hierdurch ist die Bildschirmanordnung komfortabel in eine Lage relativ zu der Haltevorrichtung bringbar, in der die Bildschirmanordnung von der Haltevorrichtung abnehmbar ist.

Bevorzugterweise kann die Lösevorrichtung hebelartig ausgebildet sein, wobei mit einem ersten Hebelabschnitt die Lösevorrichtung bedienbar ist und mit einem zweiten Hebelabschnitt ein Lösen der Bildschirmanordnung aus der Koppelstellung möglich ist. Mit der hebelartigen Ausbildung der Lösevorrichtung ist das Lösen der Bildschirmanordnung aus der Koppelstellung einfach handhabbar. Der Hebel dient dabei als Übersetzungsgetriebe.

Vorteilhafterweise kann die Bildschirmanordnung ein Bildschirmmodul und ein Basismodul aufweisen, welche längs einer gemeinsamen Seite schwenkbar miteinander verbunden sind. Durch die Schwenkbarkeit ist das Bildschirmmodul sowohl dann, wenn die Bildschirmanordnung separat vom Fahrzeug betrieben wird als auch dann, wenn die Bildschirmanordnung an der Haltevorrichtung angebracht ist, in eine gewünschte Neigung bezüglich der Blickrichtung eines Betrachters bringbar. Insbesondere sind hierdurch verschiedene räumliche Lagen des Basismoduls ausgleichbar.

Vorzugsweise kann das Bildschirmmodul in zusammengeklapptem Zustand eng anliegend an dem Basismodul vorgesehen sein. Somit nimmt die Einheit aus Bildschirmmodul und Basismodul in zusammengeklappten Zustand wenig Raum ein.

Günstigerweise kann die Dicke des Bildschirmmoduls und des Basismoduls im parallel zueinander geklappten Zustand kleiner oder etwa gleich dem Durchmesser des Gelenkes sein. Hierdurch fluchten das Bildschirmmodul und das Basismodul im parallel zueinander geklappten Zustand etwa mit dem Gelenk oder werden von diesem überragt.

Bevorzugt kann sich das Basismodul in einem aufgeklappten Zustand rückseitig des Bildschirmmoduls befinden und einen spitzen oder etwa rechten Winkel mit dem Basismodul einschließen. Auf diese Weise wird das Bildschirmmodul kippsicher durch das Basismodul auf einer Unterlage, wie etwa einem Schreibtisch, gestützt, wenn die Bildschirmanordnung separat betrieben wird.

Besonders günstig kann etwa koaxial zu der Schwenkachse von Bildschirmmodul und Basismodul gehäuseaußenseitig wenigstens ein Kopfhöreranschluss vorgesehen sein.

Damit behält der Kopfhöreranschluss bei einem Schwenken von Bildschirmmodul und Basismodul seine räumliche Lage sowohl bezüglich des Bildschirmmoduls als auch bezüglich des Basismoduls bei.

Vorteilhafterweise kann etwa koaxial zu der Schwenkachse von Bildschirmmodul und Basismodul gehäuseaußenseitig ein Lautstärkeregler vorgesehen sein. Dadurch behält der Lautstärkeregler bei einem relativen Schwenken von Bildschirmmodul und Basismodul seine Relativlage sowohl bezüglich des Bildschirmmoduls als auch des Basismoduls bei.

Vorzugsweise kann mindestens eine Antenne vorgesehen sein, welche in einer eingefahrenen Stellung eine integrale Außenform der Bildschirmanordnung bildet und in einer ausgefahrenen Stellung davon hervorragend absteht. Dadurch ist die Antenne leicht greif- und handhabbar. In der ausgefahrenen Stellung befindet sich die Antenne in einer guten Empfangsposition. In der eingefahrenen Stellung ist die Antenne kompakt an der Bildschirmanordnung vorgesehen und dort leicht zugänglich.

Günstigerweise kann die Antenne zwischen der eingefahrenen und der ausgefahrenen Stellung verschwenkbar sein. Damit ist die Antenne leicht von der einen in die andere Stellung bringbar.

Vorteilhafterweise kann die Antenne abnehmbar sein. Dies ermöglicht ein Freilegen aller von der Antenne abgedeckten Bereiche.

In einer weiteren günstigen Ausführungsform der Erfindung kann etwa koaxial zu einer Schwenkachse der Antenne ein Antennenanschluss für eine externe Antenne vorgesehen sein. Mit dem externen Antennenanschluss ist die Bildschirmanordnung mit externen Antennensignalen versorgbar.

Besonders vorteilhaft kann der Antennenanschluss bei abgenommener Antenne zugänglich sein. Hierdurch ist sichergestellt, dass die Antenne der Bildschirmanordnung und eine externe Antenne nur alternativ verwendet werden.

Gemäß einer Variante der Erfindung kann die Bildschirmanordnung in abgekoppeltem Zustand auf einer ebenen Unterlage aufgestellt betreibbar sein. Damit lässt sich die Bildschirmeinrichtung beispielsweise als Tischeinheit verwenden. So kann sie ein Benutzer beispielsweise auf dem Schreibtisch verwenden und dann bei Bedarf auch im Fahrzeug installieren.

In besonderer Weise kann die Bildschirmanordnung als Satellitenempfänger für ein zusätzliches Fernsehgerät ausgebildet sein. Auf diese Weise kann die Bildschirmanordnung im Sinn eines Beistellgeräts für das zusätzliche Fernsehgerät verwendet werden, wobei es die Satellitensignale empfängt und beispielsweise über einen Videoausgang an das zusätzlich angeschlossene Fernsehgerät weitergibt. Dabei kann gegebenenfalls die Antenne für die Aufnahme der Daten, vorzugsweise digital zu empfangende Daten, sorgen und sie an das Fernsehgerät weitergeben. So kann die Bildschirmanordnung als drahtloses Terminal für einen externen Bildschirm des Fernsehgeräts dienen.

Eine Ausführungsform der vorliegenden Erfindung ist in der Zeichnung dargestellt. Es zeigen:
- Figur 1: eine perspektivische Ansicht auf eine erfindungsgemäße Fahrzeug-Bildschirmeinrichtung,
- Figur 2: eine perspektivische Ansicht auf eine Haltevorrichtung der Fahrzeug-Bildschirmeinrichtung aus Figur 1,
- Figur 3: eine vordere, perspektivische Ansicht auf eine Bildschirmanordnung der Fahrzeug-Bildschirmeinrichtung aus Figur 1,
- Figur 4: eine hintere, perspektivische Ansicht auf die Bildschirmanordnung aus Figur 3,
- Figur 5: eine ausschnittsweise Ansicht auf eine Lösevorrichtung der Bildschirmanordnung in betätigtem Zustand,
- Figur 6: eine Darstellung des Befestigungsvorganges der Bildschirmanordnung an der Haltevorrichtung,
- Figur 7: eine seitliche Ansicht auf die Fahrzeug-Bildschirmeinrichtung, wobei die Bildschirmanordnung an der Haltevorrichtung befestigt ist und
- Figur 8: eine perspektivische Ansicht auf die Bildschirmanordnung in separatem, betriebsbereitem Zustand.

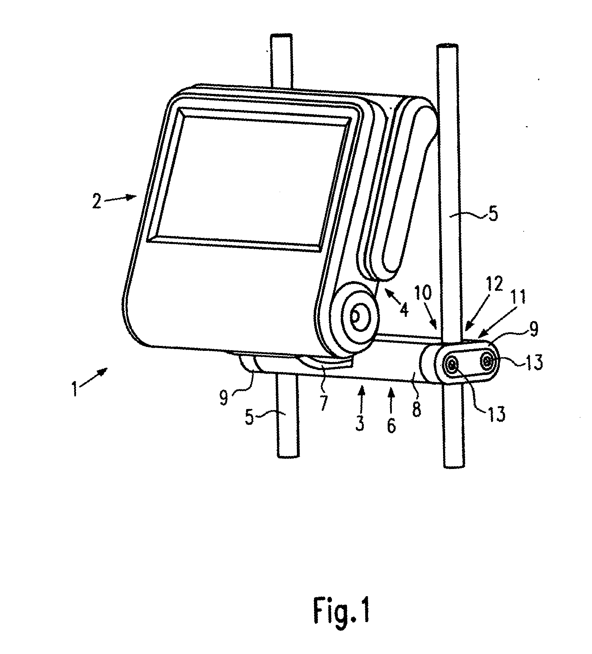

Figur 1 zeigt eine erfindungsgemäße Fahrzeug-Bildschirmeinrichtung 1, die eine Bildschirmanordnung 2 und eine Haltevorrichtung 3 aufweist. Dabei befindet sich die Bildschirmanordnung 2 in einem lösbar an eine Koppelanordnung 4 der Haltevorrichtung 3 angekoppeltem Zustand. Die Haltevorrichtung 3 ist an einer Innenstruktur eines nicht gezeigten Fahrzeugs befestigt. Bei dieser Ausführungsform wird die Innenstruktur durch Kopfstützenstäbe 5 eines nicht gezeigten Fahrzeugsitzes repräsentiert.

Die Haltevorrichtung 3 weist ein Befestigungsteil 6 auf, mit welchem die Haltevorrichtung 3 an den Kopfstützenstäben 5 befestigt ist. Das Befestigungsteil 6 ist über ein bogenförmig ausgebildetes Trägerelement 7 mit der Koppelanordnung 4 der Haltevorrichtung 3 verbunden.

Das Befestigungsteil 6 weist ein Mittelteil 8 und daran außenseitig lösbar anbringbare Haltebacken 9 auf. Das Mittelteil 8 weist beiderseits außenseitig etwa halbzylinderförmige Ausnehmungen 10 auf und die Haltebacken 9 weisen jeweils innenseitig etwa halbzylinderförmige Ausnehmungen 11 auf. Im am Mittelteil 8 befestigten Zustand der Haltebacken 9 wird durch die halbzylinderförmigen Ausnehmungen 10, 11 jeweils eine Klemmbohrung 12 gebildet, durch die jeweils ein Kopfstützenstab 5 geführt ist. Die Haltebacken 9 sind jeweils mit Hilfe von Schrauben 13 an dem Mittelteil 8 befestigt. Durch Festziehen der Schrauben 13 kommen die halbzylinderförmigen Ausnehmungen 10, 11 jeweils festklemmend an dem jeweiligen Kopfstützenstab 5 zur Anlage.

Die Bildschirmanordnung 2 wird über die Haltevorrichtung 3 mit Daten und elektrischer Energie versorgt. Die Haltevorrichtung 3 wird wiederum über wenigstens einen der Kopfstützenstäbe 5 mit Daten und elektrischer Energie versorgt.

Das Trägerelement 7 ist hohl ausgebildet, wobei elektrische Kabel hierdurch von dem Befestigungsbereich 6 zu der Koppelanordnung 4 geführt sind.

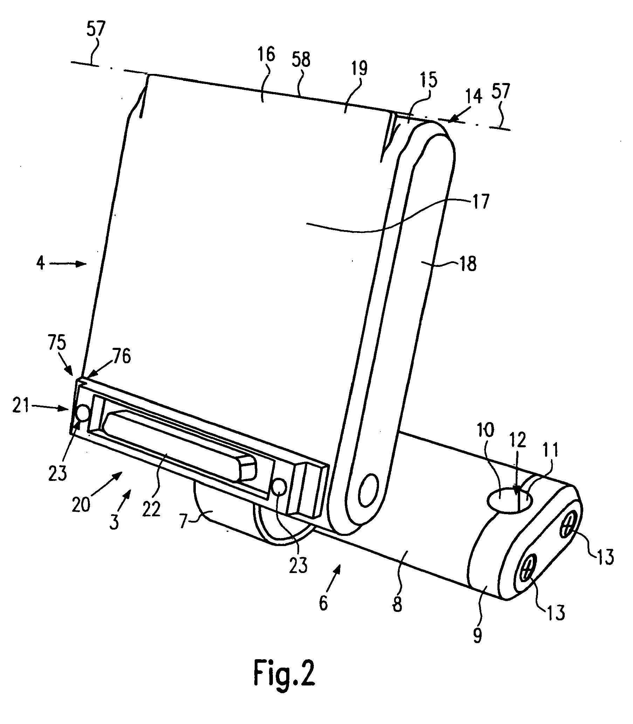

In Figur 2 ist die Haltevorrichtung 3 detaillierter gezeigt. Die Koppelanordnung 4 weist an ihrem oberen Ende 14 parallel zu einer Oberseite 15 verlaufend einen Auflagevorsprung 16 auf. Der Auflagevorsprung 16 erstreckt sich etwa keilförmig vom Körper 18 der Koppelanordnung 4 und steht über die Oberseite 15 über. Eine außenseitige Fläche 19 des Auflagevorsprungs 16 ist eine Fortsetzung einer Koppelhauptfläche 17 der Koppelanordnung 4. Die Koppelhauptfläche 17 befindet sich auf einer Seite, die der Bildschirmanordnung 2 in angekoppeltem Zustand direkt gegenüberliegt.

An einem unteren Ende 20 der Koppelanordnung 4 ist ein erstes Steckverbindungsteil 21 von der Koppelhauptfläche 17 etwa quer vorstehend angeordnet. Das erste Steckverbindungsteil 21 weist einen ersten Steckerteil 22 auf, der in dieser Ausführungsform ein männlicher, elektrischer Steckerteil ist. Außenseitig jeweils neben dem ersten Steckerteil 22 sind erste Steckführungen 23 vorgesehen, die in dieser Ausführungsform weibliche, mechanische Steckausnehmungen sind.

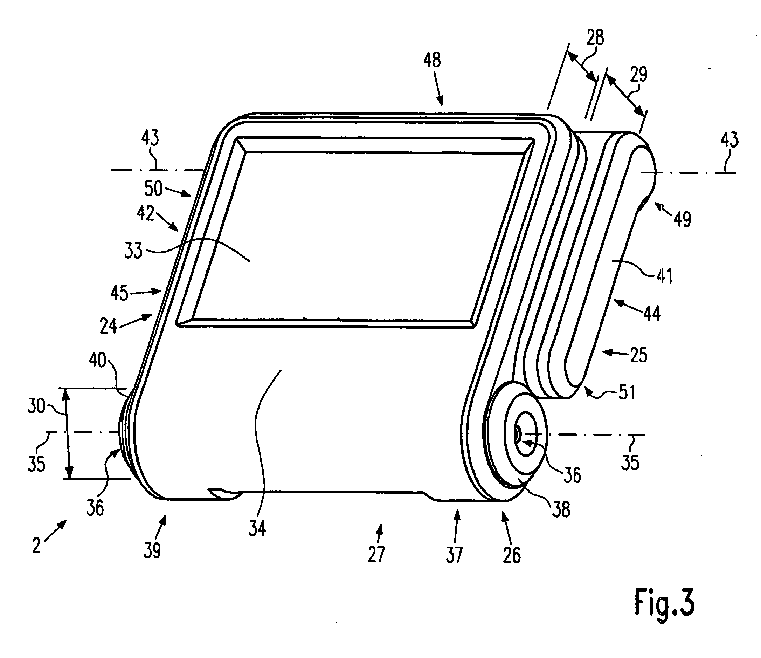

In Figur 3 ist die Bildschirmanordnung 2 dargestellt, die ein Bildschirmmodul 24 und ein Basismodul 25 aufweist, die längs einer gemeinsamen Seite 27 über ein Schwenkgelenk 26 schwenkbar miteinander verbunden sind. In Figur 3 sind das Bildschirmmodul 24 und das Basismodul 25 in einem parallel zueinander geklappten Zustand gezeigt. Dabei sind die Dicke 28 des Bildschirmmoduls 24 und die Dicke 29 des Basismoduls 25 zusammen etwa gleich dem Durchmesser 30 des Gelenkes 26.

In einer anderen Ausführungsform der Erfindung können die Dicken 28, 29 zusammen auch kleiner als der Durchmesser 30 des Schwenkgelenkes 26 sein.

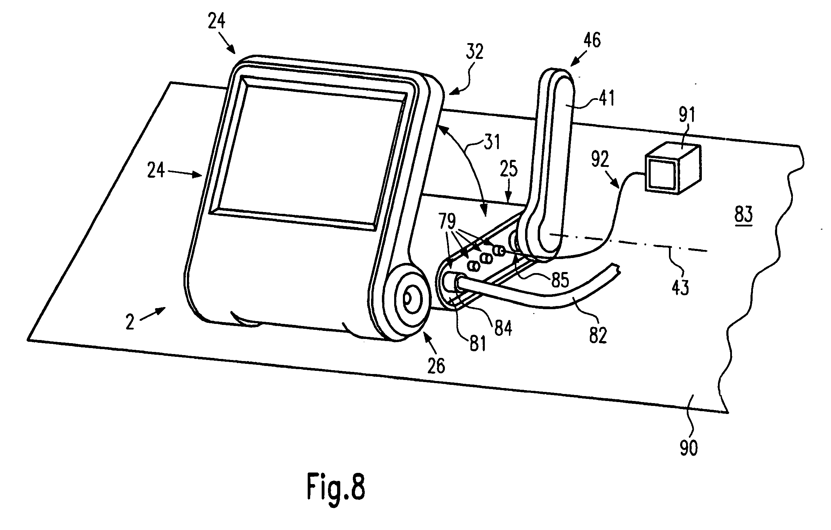

In zusammengeklappten Zustand liegen das Bildschirmmodul 24 und das Basismodul 25 eng aneinander an. In einem aufgeklappten Zustand, wie er in Figur 8 gezeigt ist, können das Bildschirmmodul 24 und das Basismodul 25 beispielsweise einen spitzen oder einen etwa rechten Winkel 31 miteinander einschließen. Dabei wird der Winkel 31 als ein Winkel zwischen einer Rückseite 32 des Bildschirmmoduls 24 und dem Basismodul 25 verstanden.

Wie weiter Figur 3 zu entnehmen ist, weist das Bildschirmmodul 24 einen Bildschirm 33 an einer Vorderseite 34 auf. Etwa koaxial zu einer Schwenkachse 35 des Schwenkgelenkes 26 ist jeweils gehäuseaußenseitig ein Kopfhöreranschluss 36 vorgesehen. Ferner ist etwa koaxial zu der Schwenkachse 35 gehäuseaußenseitig an einer rechten Seite 37 der Bildschirmanordnung 2 ein Lautstärkeregler 38 vorgesehen. In dieser Ausführungsform der Erfindung ist der Lautstärkeregler 38 etwa um die Schwenkachse 35 drehbar. Auf einer linken Seite 39 der Bildschirmanordnung 2 ist etwa koaxial zu der Schwenkachse 35 gehäuseaußenseitig ein Menüwähler 40 angeordnet. Der Menüwähler 40 ist in dieser Ausführungsform der Erfindung etwa um die Schwenkachse 35 drehbar.

An dem Basismodul 25 ist jeweils bezüglich der rechten und der linken Seite 37, 39 der Bildschirmanordnung 2 außenseitig eine Antenne 41, 42 vorgesehen. Die erste und zweite Antenne 41, 42 sind separat voneinander jeweils um eine zu der Schwenkachse 35 des Schwenkgelenkes 26 parallele Antennenschwenkachse 43 zwischen einer eingefahrenen Stellung 44, 45 und einer ausgefahrenen Stellung 46, 47 schwenkbar. In der Darstellung der Figur 3 befindet sich sowohl die erste Antenne 41 in ihrer eingefahrenen Stellung 44 als auch die zweite Antenne 42 in ihrer eingefahrenen Stellung 45. In ihren eingefahrenen Stellungen 44, 45 bilden die Antennen 41, 42 jeweils eine integrale Außenform des Basismoduls 25 und verdecken Anschlüsse und/oder Schalter.

Die Antennenschwenkachse 43 befindet sich im Bereich einer Außenseite 48 des Basismoduls 25, die dem Schwenkgelenk 26 gegenüberliegt. Im Bereich der Antennenschwenkachse 43 sind die Antennen 41, 42 jeweils etwa bogenförmig verdickt ausgebildet. Die Verdickungen 49, 50 erstrecken sich in Richtung zu einer Rückseite 51 des Basismoduls 25. Die Rückseite 51 des Basismoduls 25 ist in zusammengeklappten Zustand der Bildschirmanordnung 2 dem Bildschirmmodul 24 abgewandt.

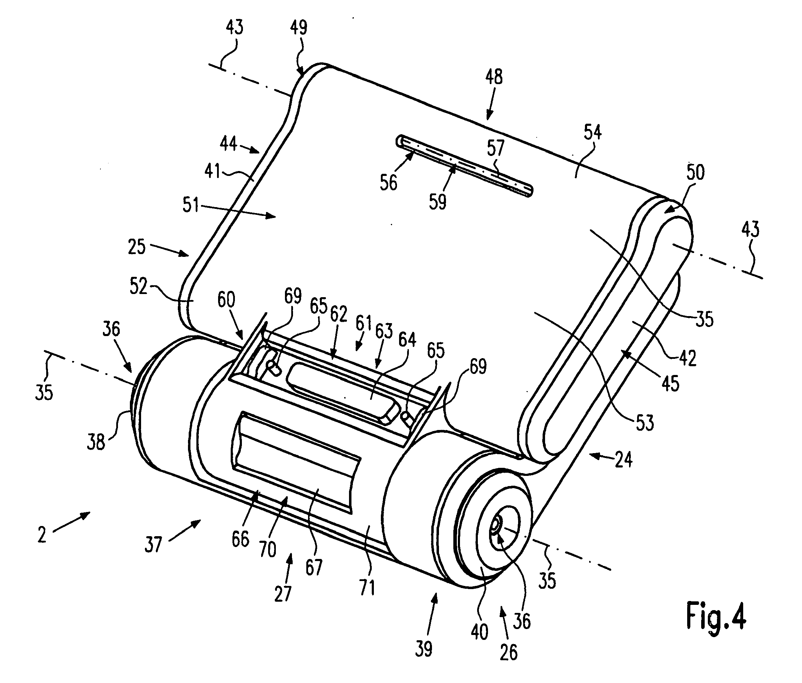

In Figur 4 ist die Bildschirmanordnung 2 in zusammengeklappten Zustand perspektivisch von hinten gezeigt. Dabei ist die Rückseite 51 des Basismoduls 25 gezeigt. Die Rückseite 51 weist zwischen der Außenseite 48 des Basismoduls 25 und einer Gelenkseite 52 des Basismoduls 25 einen ebenen Bereich 53 auf. Angrenzend an den ebenen Bereich 53 ist im Bereih und parallel zu der Außenseite 48 ein etwa gerundeter Buckel 54 an der Rückseite 51 vorgesehen. Der Buckel 54 bezüglich des ebenen Bereiches 53 etwa quer nach außen ab. Angrenzend an den ebenen Bereich 53 weist der Buckel 54 eine gerundete Kehle 55 auf. Die Verdickungen 49, 50 der Antennen 41, 42 korrelieren zu dem Buckel 54 der Kehle 55.

Etwa mittig im Bereich der Kehle 55 ist parallel zu der Kehle 55 und dem Buckel 54 eine längliche Ausnehmung 56 ausgeformt. Die Ausnehmung 56 ist etwa schlitzartig ausgebildet. In die Ausnehmung 56 ist der Auflagevorsprung 16 der Koppelanordnung 4 wenigstens abschnittsweise einführbar. Auf diese Weise kann die Bildschirmanordnung 2 an der Haltevorrichtung 3 eingehängt werden. Dementsprechend bilden die Ausnehmung 56 des Basismoduls 25 und der Auflagevorsprung 16 der Koppelanordnung 4 dann, wenn die Bildschirmanordnung 2 lösbar an der Haltevorrichtung 3 eingehängt ist, ein etwa schlitzartig Auflagegelenk.

Das schlitzartige Auflagegelenk ermöglicht ein Schwenken der Bildschirmanordnung 2 relativ zu der Haltevorrichtung 3 um eine Auflageachse 57. Die Auflageachse 57 verläuft etwa im Bereich des Grundes der Ausnehmung 56 auf Seiten des Basismoduls 25 und etwa im Bereich einer oberen Kante 58 des Auflagevorsprungs 16 der Koppelanordnung 4, wobei die obere Kante 58 am Grund 59 der Ausnehmung 56 zur Anlage kommt. Die Bildschirmanordnung 2 ist im an die Haltevorrichtung 3 angehängten Zustand um die Auflageachse 57 an die Haltevorrichtung 3 heranschwenkbar.

Im Bereich zwischen einer Gelenkseite 52 und dem Schwenkgelenk 26 weist das Basismodul 25 eine Gelenkanbindung 60 auf. In einem mittleren Bereich 61 ist die Gelenkanbindung 60 vertieft ausgebildet. In der Vertiefung 62 ist ein zweites Steckverbindungsteil 63 vorgesehen. Das zweite Steckverbindungsteil weist einen zweiten Steckerteil 64 auf, der in dieser Ausführungsform der Erfindung ein zu dem ersten Steckerteil 22 der Koppelanordnung 4 passender, weiblicher elektrischer Steckerteil ist. Der erste Steckerteil 22 ist wenigstens abschnittsweise in den zweiten Steckerteil 64 einführbar. Außenseitig des zweiten Steckerteils 64 sind zweite Steckführungen 65 angeordnet. Die zweiten Steckführungen 65 sind in dieser Ausführungsform der Erfindung zu den ersten Steckführungen 23 der Koppelanordnung 4 passende, etwa stiftartige männliche mechanische Steckführungen. Die zweiten Steckführungen 65 sind in die ersten Steckführungen 23 wenigstens bereichsweise einführbar. Auf diese Weise ist mit Hilfe des ersten Steckverbindungsteiles 21 der Koppelanordnung 4 und des zweiten Steckverbindungsteiles 63 des Basismoduls 25 eine lösbare Steckverbindung der Bildschirmanordnung 2 und der Haltevorrichtung 3 realisierbar. Zum Zusammenstecken und Lösen des ersten und zweiten Steckverbindungsteiles 22, 63 ist jeweils eine Klemmkraft der Steckverbindung zu überwinden, die eine Kopplungskraft der Steckverbindung darstellt. Durch die Kopplungskraft wird ein unbeabsichtigtes Lösen der Bildschirmanordnung 2 von der Haltevorrichtung 3 verhindert. In dieser Ausführungsform der Erfindung wird die Kopplungskraft durch das erste und zweite Steckerteil 22, 64 erzeugt.

Im Bereich des Schwenkgelenkes 26 und der Gelenkanbindung 60 weist das Basismodul 25 eine Lösevorrichtung 66 auf. Die Lösevorrichtung 66 ist etwa hebelartig ausgebildet und verläuft abschnittsweise im Innern des Basismoduls 25. Die Lösevorrichtung 66 weist einen ersten Hebelabschnitt 67 auf, der bedientastenartig ausgebildet ist und einem zweiten Hebelabschnitt 68 gegenüberliegt. Der zweite Hebelabschnitt 68 weist zwei Drücknocken 69 auf.

Der erste Hebelabschnitt 67 ist durch eine Öffnung 70 im mittleren Bereich eines basismodulseitigen Teiles 71 des Schwenkgelenkes 26 freiliegend und von außen zugänglich. Die Drücknocken 69 stehen in den Innenbereich der Vertiefung 62 der Gelenkanbindung 60 wenigstens abschnittsweise vor und befinden sich jeweils außenseitig des zweiten Steckverbindungsteils 63.

Die Lösevorrichtung 66 ist um eine im Innern des Basismoduls 25 etwa parallel zu der Schwenkachse 35 verlaufende, nicht gezeigte Lösungsvorrichtungsschwenkachse zwischen einer Rückzugsposition und einer Löseposition schwenkbar. In Figur 4 ist die Lösevorrichtung 66 in ihrer Rückzugsposition gezeigt.

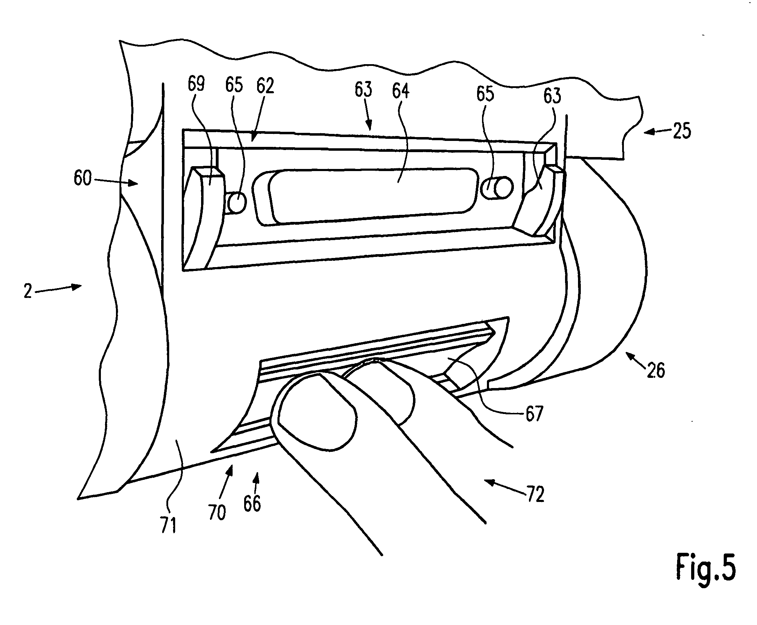

Figur 5 zeigt einen Abschnitt der Bildschirmanordnung 2, wobei sich die Lösevorrichtung 66 in ihrer Löseposition befindet. Dabei ist die Lösevorrichtung durch Drücken von Fingern 72 auf den ersten Hebelabschnitt 67 gegen eine Federkraft einer nicht gezeigten Rückstellfeder in die Lösestellung bewegt. In der Lösestellung befindet sich der erste Hebelabschnitt 67 tiefer in der Öffnung 70 als in der Rückzugsstellung der Lösevorrichtung 66. Ferner ragen die Drücknocken 69 in der Lösestellung jeweils wenigstens abschnittsweise über die Gelenkanbindung 60 überstehend aus der Vertiefung 62 hervor.

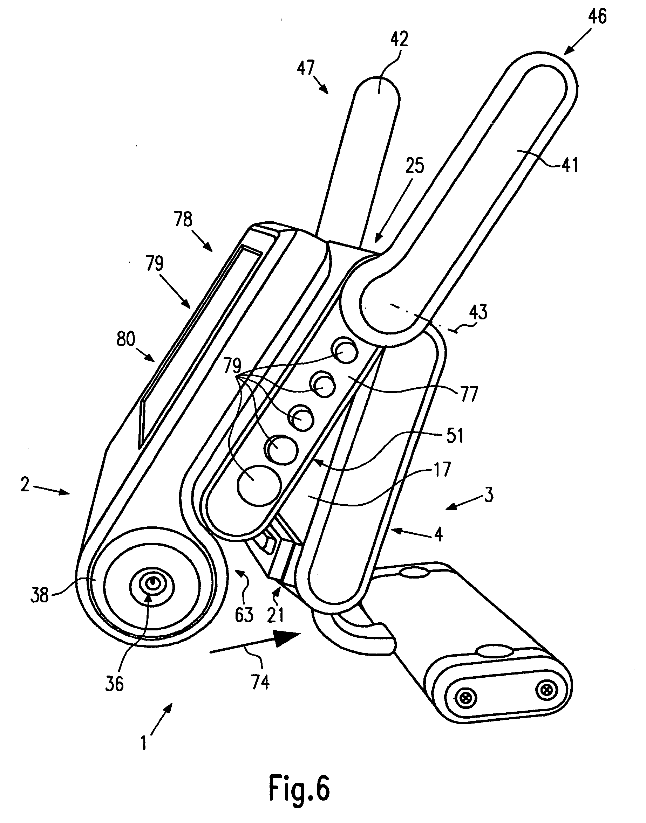

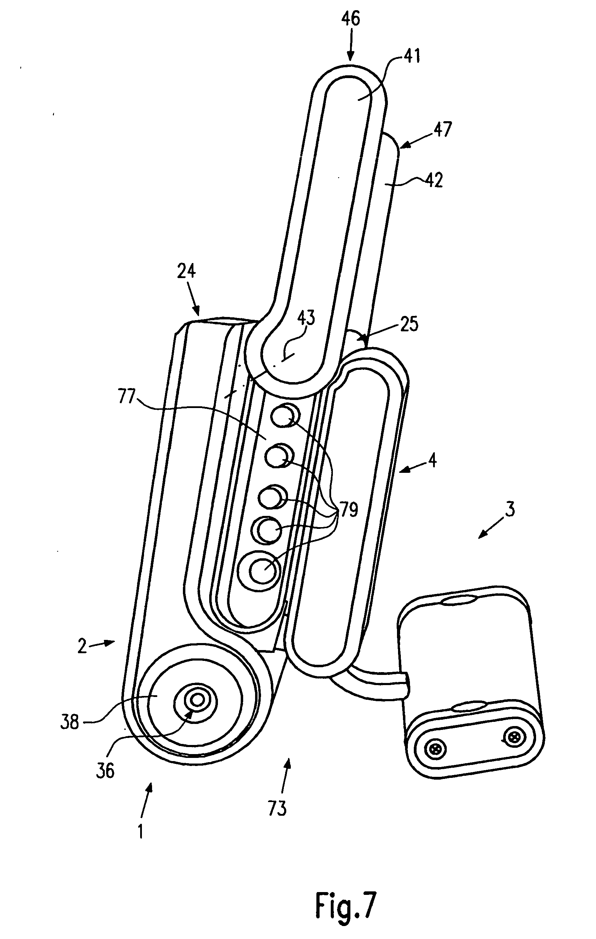

In Figur 6 ist die Bildschirmanordnung 2 in einer an der Haltevorrichtung 3 eingehängten Stellung gezeigt. Dabei schließen die Rückseite 51 des Basismoduls 25 und die Kopplungshauptfläche 17 der Koppelanordnung 4 noch einen spitzen Winkel miteinander ein. Durch Heranschwenken der Bildschirmanordnung 2 an die Haltevorrichtung 3 wird die Bildschirmanordnung 2 in ihre in Figur 7 gezeigte Koppelstellung 73 gebracht. In der Koppelstellung 73 ist die Bildschirmanordnung 2 weiterhin an der Haltevorrichtung 3 eingehängt, die Rückseite 51 des Basismoduls befindet sich etwa im koplanarer Ausrichtung zu der Koppelhauptfläche 17 der Koppelanordnung 4. Mit den ersten und zweiten Steckverbindungsteilen 21, 63 ist die Steckverbindung hergestellt.

Das Herausschwenken der Bildschirmanordnung 2 in ihre Koppelstellung 73 erfolgt in einer in Figur 6 dargestellten Pfeilrichtung 74. Wenn das erste und zweite Steckverbindungsteil 21, 63 miteinander in Eingriff gelangen, werden die zweiten Steckführungen 65 in die ersten Steckführungen 23 eingeführt, wodurch in diesem letzten Abschnitt des Heranschwenkens die Schwenkbewegung der Bildschirmanordnung 2 bezüglich der Haltevorrichtung 3 gerichtet geführt wird. Während des Führens durch die ersten und zweiten Steckführungen 23, 65 werden die ersten und zweiten Steckerteile 22, 64 mit Überwinden der Steckkraft zusammengesteckt.

Zum Lösen der Bildschirmanordnung 2 aus ihrer Koppelstellung 73 wird die Lösevorrichtung 66, wie in Figur 5 gezeigt, mit Hilfe der Finger 72 betätigt. Dabei drücken die Drücknocken 69 jeweils gegen Drückflächen 75, die außenseitig angrenzend neben dem ersten Steckverbindungsteiles 21 vorgesehen sind, vgl. Figur 2. Die Drückflächen 75 sind etwa koplanar zu der Koppelhauptfläche 17 der Koppelanordnung 4 an seitlichen Absätzen 76 ausgebildet. Die seitlichen Absätze 76 ragen etwa senkrecht von der Koppelhauptfläche 17 hervor und sind einstückig mit dem ersten Steckverbindungsteil 21 ausgebildet.

Durch das Drücken der Drücknocken 69 gegen die Drückfläche 75 wird eine entgegengesetzt zu der in Figur 6 gezeigten Pfeilrichtung 74 gerichteter, die Bildschirmanordnung 2 relativ von der Haltevorrichtung 3 wegdrückende Kraft aufgebracht. Mit dieser Kraft wird die Steckkraft überwunden und die Bildschirmanordnung 2 in einen lediglich an der Haltevorrichtung 3 eingehängten Zustand zurückversetzt. Aus dem lediglich eingehängten Zustand ist die Bildschirmanordnung 2 durch Aushängen von Auflagevorsprung 16 und Ausnehmung 56 in einen separierten Zustand bringbar.

In den Figuren 6 und 7 sind die Antennen 41, 42 in ausgefahrenen Stellungen 46, 47 gezeigt. Dabei wurden die Antennen 41, 42 jeweils separat um die Antennenschwenkachse 43 gedreht. In ihren ausgefahrenen Stellungen 46, 47 stehen die Antennen 41, 42 von dem Basismodul 25 ab.

In den ausgefahrenen Stellungen 46, 47 der Antennen 41, 42 sind an beiden Seiten des Basismoduls 25 vorgesehene Vertiefungen 77, 78 mit darin angeordneten Anschlüssen 79 und/oder Schaltern 80 freigegeben. Bei den Anschlüssen 79 kann es sich um Audio Ein- und/oder Ausgänge handeln, es kann ein Stromversorgungseingang vorgesehen sein, und bei einem Schalter kann es sich um einen EIN/AUS-Schalter der Bildschirmanordnung 2 handeln.

Die Antennen 41, 42 sind abnehmbar. In abgenommenem Zustand werden externe Antennenanschlüsse freigelegt, die jeweils etwa koaxial zu der Antennenschwenkachse 43 am Basismodul 25 vorgesehen sind. Über diese externen Antennenanschlüsse ist die Bildschirmanordnung 2 mit externen Antennensignalen versorgbar.

In Figur 8 ist die Bildschirmanordnung 2 in von der Halteanordnung 3 separiertem Zustand gezeigt, wobei das Bildschirmmodul 24 gegenüber dem Basismodul 25 aufgeklappt ist. Das Basismodul 25 liegt mit seiner Unterseite etwa flach auf einer Tischplatte 90 auf. Die erste Antenne 41 befindet sich in ausgefahrener Stellung 46, wobei die Längsrichtung der Antenne 41 etwa quer zu einer Stellfläche 83 verläuft, auf der die Bildschirmanordnung 2 steht. Von den freigegebenen Anschlüssen 79 der Vertiefung 77 ist ein benachbart zu dem Schwenkgelenk 26 angeordneter Anschluss 79 als ein Stromzuführanschluss 81 ausgebildet. In den Stromzuführanschluss 81 ist ein Stromzuführkabel 82 mit seinem Stromzuführstecker 84 eingesteckt. Auf diese Weise wird die Bildschirmanordnung 2 mit externer Energie versorgt.

Ferner ist in Figur 8 ein Antennengelenk 85 der ersten Antenne 41 gezeigt. Mit Hilfe des Antennengelenkes 85 ist die erste Antenne 41 um die Antennenschwenkachse 43 bewegbar. Wenn die erste Antenne 41 abgenommen ist, ist ein im Innenbereich des Antenenngelenkes 85 angeordneter externer Antennenanschluss zugänglich.

Bei der in Figur 8 dargestellten Verwendung im abgekoppelten Zustand wird über die Antenne 41 ein Satellitensignal aufgenommen, vorzugsweise in digitaler Form. Über den Videoausgang 79 ist das Basismodul über eine Leitung 92 mit einem externen Fenrsehgerät 91 verbunden, das hier nur schematisch dargestellt ist und einer kompletten Fernseh- und/oder Videoanlage entsprechen kann. In diesem Fall dient die Bildschirmeinrichtung als Satellitenempfänger, das in Form eines Beistellgeräts mit dem Fernsehgerät 91 verbunden die Daten für den Betrieb des Femsehgeräts 91 liefert. Die Bildschirmanordnung kann mit Hilfe der Antennen als drahtloses Terminal dienen.

Die als Fahrzeug-Bildschirmeinrichtung erläuterte Erfindung muss nicht zwangsweise in einem Fahrzeug, wie einem Auto, angebracht werden. Denkbar im Sinn eines Fahrzeugs sind auch andere Verwendungen, welche an anderen Strukturen befestigbar ist, welche beispielsweise auch stationär sein können. In diesen Fällen kann die erfindungsgemäße Bildschirmeinrichtung als mobile Bildschirmeinrichtung benutzt werden, die von dem angekoppelten Zustand in den abgekoppelten Zustand und umgekehrt bringbar ist.

## Patentansprüche

1. Fahrzeug-Bildschirmeinrichtung (1) mit einer Bildschirmanordnung (2) und einer Haltevorrichtung (3), welche an einer Innenstruktur des Fahrzeugs befestigbar ist, wobei die Bildschirmanordnung (2) lösbar an einer Koppelanordnung (4) der Haltevorrichtung (3) ankoppelbar ist und in abgekoppeltem Zustand separat davon betreibbar ist,
**dadurch gekennzeichnet,**
**dass** die Bildschirmanordnung (2) an der Haltevorrichtung (3) lösbar einhängbar und eingehängt in eine Koppelstellung (73) an die Haltevorrichtung (3) heranschwenkbar ist.

2. Fahrzeug-Bildschirmeinrichtung nach Anspruch 1,

3. Fahrzeug-Bildschirmeinrichtung nach einem der Ansprüche 1 oder 2,
**dadurch gekennzeichnet,**
**dass** die Haltevorrichtung (3) über eine stabartige Innenstruktur des Fahrzeugs, vorzugsweise die Streben (5) einer Kopfstütze, mit Daten und/oder Energie versorgbar ist.

4. Fahrzeug-Bildschirmeinrichtung nach wenigstens einem der vorhergehenden Ansprüche,
**dadurch gekennzeichnet,**
**dass** die Bildschirmanordnung (2) über ein schlitzartiges Auflagegelenk (16, 56) an der Haltevorrichtung (3) einhängbar ist.

5. Fahrzeug-Bildschirmeinrichtung nach wenigstens einem der vorhergehenden Ansprüche,
**dadurch gekennzeichnet,**
**dass** in angekoppeltem Zustand (73) zwischen der Bildschirmanordnung (2) und der Haltevorrichtung (3) eine lösbare Steckverbindung (21, 63) vorgesehen ist, welche eine Kopplungskraft der Bildschirmanordnung (2) an der Haltevorrichtung (3) bildet.

6. Fahrzeug-Bildschirmeinrichtung nach wenigstens einem der vorhergehenden Ansprüche,
**dadurch gekennzeichnet,**
**dass** wenigstens ein Führungselement (23, 65) an der Bildschirmanordnung (2) und/oder der Haltevorrichtung (3) vorgesehen ist, mit welchem das Ankoppeln der Bildschirmanordnung (2) an die Haltevorrichtung (3) wenigstens abschnittsweise gerichtet führbar ist.

7. Fahrzeug-Bildschirmeinrichtung nach wenigstens einem der vorhergehenden Ansprüche,
**dadurch gekennzeichnet,**
**dass** die Bildschirmanordnung (2) und/oder die Haltevorrichtung (3) eine Lösevorrichtung (66) aufweist, mit welcher die Bildschirmanordnung (2) aus ihrer Koppelstellung (73) wenigstens abschnittsweise lösbar ist.

8. Fahrzeug-Bildschirmeinrichtung nach Anspruch 7,
**dadurch gekennzeichnet,**
**dass** die Lösevorrichtung (66) hebelartig ausgebildet ist, wobei mit einem ersten Hebelabschnitt (67) die Lösevorrichtung (66) bedienbar ist und mit einem zweiten Hebelabschnitt (68) ein Lösen der Bildschirmanordnung (2) aus der Koppelstellung (73) möglich ist.

9. Fahrzeug-Bildschirmeinrichtung nach wenigstens einem der vorhergehenden Ansprüche,
**dadurch gekennzeichnet,**
**dass** die Bildschirmanordnung (2) ein Bildschirmmodul (24) und ein Basismodul (25) aufweist, welche längs einer gemeinsamen Seite (27) schwenkbar (35) miteinander verbunden sind.

10. Fahrzeug-Bildschirmeinrichtung nach Anspruch 9,
**dadurch gekennzeichnet,**
**dass** das Bildschirmmodul (24) in zusammengeklapptem Zustand eng anliegend an dem Basismodul (25) vorgesehen ist.

11. Fahrzeug-Bildschirmeinrichtung nach Anspruch 9 oder 10,
**dadurch gekennzeichnet,**
**dass** die Dicke (28, 29) des Bildschirmmoduls (24) und des Basismoduls (25) im parallel zueinander geklappten Zustand kleiner oder etwa gleich dem Durchmesser (30) des Gelenkes (26) ist.

12. Fahrzeug-Bildschirmeinrichtung nach wenigstens einem der Ansprüche 9 bis 11,
**dadurch gekennzeichnet,**
**dass** sich das Basismodul (25) in einem aufgeklappten Zustand rückseitig des Bildschirmmoduls (24) befindet und einen spitzen oder etwa rechten Winkel (31) mit dem Bildschirmmodul (24) einschließt.

13. Fahrzeug-Bildschirmeinrichtung nach wenigstens einem der Ansprüche 9 bis 12,
**dadurch gekennzeichnet,**
**dass** etwa koaxial zu der Schwenkachse (35) von Bildschirmmodul (24) und Basismodul (25) gehäuseaußenseitig wenigstens ein Kopfhöreranschluss (36) vorgesehen ist.

14. Fahrzeug-Bildschirmeinrichtung nach wenigstens einem der Ansprüche 9 bis 13,
**dadurch gekennzeichnet,**
**dass** etwa koaxial zu der Schwenkachse (35) von Bildschirmmodul (24) und Basismodul (25) gehäuseaußenseitig ein Lautstärkeregler (38) vorgesehen ist.

15. Fahrzeug-Bildschirmeinrichtung nach wenigstens einem der vorhergehenden Ansprüche,
**dadurch gekennzeichnet,**
**dass** mindestens eine Antenne (41, 42) vorgesehen ist, welche in einer eingefahrenen Stellung (44, 45) eine integrale Außenform der Bildschirmanordnung (2) bildet und in einer ausgefahrenen Stellung (46, 47) davon hervorragend absteht.

16. Fahrzeug-Bildschirmeinrichtung nach Anspruch 15,
**dadurch gekennzeichnet,**
**dass** die Antenne zwischen der eingefahrenen (44, 45) und der ausgefahrenen Stellung (46, 47) verschwenkbar ist.

17. Fahrzeug-Bildschirmeinrichtung nach einem der Ansprüche 15 oder 16,
**dadurch gekennzeichnet,**
**dass** die Antenne (41, 42) abnehmbar ist.

18. Fahrzeug-Bildschirmeinrichtung nach wenigstens einem der Ansprüche 15 bis 17,
**dadurch gekennzeichnet,**
**dass** etwa koaxial zu einer Schwenkachse (43) der Antenne (41, 42) ein Antennenanschluss für eine externe Antenne vorgesehen ist.

19. Fahrzeug-Bildschirmeinrichtung nach Anspruch 18,
**dadurch gekennzeichnet,**
**dass** der Antennenanschluss bei abgenommener Antenne (41, 42) zugänglich ist.

20. Fahrzeug-Bildschirmeinrichtung nach wenigstens einem der vorhergehenden Ansprüche,
**dadurch gekennzeichnet,**
**dass** die Bildschirmanordnung (2) in abgekoppeltem Zustand auf einer ebenen Unterlage (90) aufgestellt betreibbar ist.

21. Fahrzeug-Bildschirmeinrichtung nach wenigstens einem der vorhergehenden Ansprüche,
**dadurch gekennzeichnet,**
**dass** die Bildschirmanordnung (2) als Satellitenempfänger für ein zusätzliches Fernsehgerät (91) ausgebildet ist.

## Claims

1. A display device (1) for a vehicle with a display arrangement (2) and a mounting device (3), which is connectable to an internal structure of the vehicle, wherein the display arrangement (2) may be releasably coupled to a coupling assembly (4) of the mounting device (3) and, in the decoupled state, is operable separately therefrom, **characterised in that** the display arrangement (2) is releasably mountable on the mounting device (3) and, when mounted, is pivotable into a coupled position (73) on the mounting device (3).

2. A display device for a vehicle as claimed in claim 1, **characterised in that** the display arrangement (2) may be supplied with data and/or energy via the mounting device (3).

3. a display device for a vehicle as claimed in one of claims 1 or 2, **characterised in that** the mounting device (3) may be supplied with data and/or energy via a rod-like internal structure of the vehicle, preferably the struts (5) of a headrest.

4. A display device for a vehicle as claimed in at least one of the preceding claims, **characterised in that** the display arrangement (2) is mountable on the mounting device (3) via a slot-like support joint (16,56).

5. A display device for a vehicle as claimed in at least one of the preceding claims, **characterised in that**, in the coupled state (73), a releasable plug connection (21,63) is provided between the display arrangement (2) and the mounting device (3) which generates a coupling force for the display arrangement (2) to the mounting device (3).

6. A display device for a vehicle as claimed in at least one of the preceding claims, **characterised in that** at least one guide element (23,65) is provided on the display arrangement (2) and/or the mounting device (3), with which the coupling of the display arrangement (2) to the mounting device (3) may be directionally guided, at least in sections.

7. A display device for a vehicle as claimed in at least one of the preceding claims, **characterised in that** the display arrangement (2) and/or the mounting device (3) comprises a release device (66), with which the display arrangement (2) is releasable, at least in sections, from its coupled position (73).

8. A display device for a vehicle as claimed in claim 7, **characterised in that** the release device (66) is of lever-like construction, whereby the release device (66) is operable with a first lever section (67) and release of the display arrangement (2) from the coupled position (73) is possible with a second lever section (68).

9. A display device for a vehicle as claimed in at least one of the preceding claims, **characterised in that** the display arrangement (2) comprises a display module (24) and a base module (25), which are pivotably connected together along a common side (27).

10. A display device for a vehicle as claimed in claim 9, **characterised in that** the display module (24) is provided, in the folded state, closely adjacent to the base module (25).

11. A display device for a vehicle as claimed in claim 9 or 10, **characterised in that** the thickness (28,29) of the display module (24) and of the base module (25), in the state in which they are folded parallel to one another, is smaller than or approximately equal to the diameter (30) of the joint (26).

12. A display device for a vehicle as claimed in at least one of claims 9 to 11, **characterised in that** the base module (25) is situated, in an unfolded state, on the rear side of the display module (24) and defines an acute angle or approximately a right angle (31) with the display module (24).

13. A display device for a vehicle as claimed in at least one of claims 9 to 12, **characterised in that** at least one headphone connection (36) is provided on the outer surface of the housing approximately co-axially with the pivotal axis (35) of the display module (24) and base module (25).

14. A display device for a vehicle as claimed in at least one of claims 9 to 13, **characterised in that** a volume control (38) is provided on the outer surface of the housing approximately co-axially with the pivotal axis (35) of the display module (24) and base module (25).

15. A display device for a vehicle as claimed in at least one of the preceding claims, **characterised in that** at least one antenna (41,42) is provided, which, in a retracted position (44,45), defines an integral outer shape of the display device (2) and, in an extended position (46,47) projects therefrom.

16. A display device for a vehicle as claimed in claim 15, **characterised in that** the antenna is pivotable between the retracted position (44, 45) and the extended position (46,47).

17. A display device for a vehicle as claimed in one of claims 15 or 16, **characterised in that** the antenna (41,42) is removable.

18. A display device for a vehicle as claimed in at least one of claims 15 to 17, **characterised in that** an antenna connection for an external antenna is provided approximately co-axially with a pivotal axis (43) of the antenna (41,42).

19. A display device for a vehicle as claimed in claim 18, **characterised in that** the antenna connection is accessible when the antenna (41,42) is removed.

20. A display device for a vehicle as claimed in at least one of the preceding claims, **characterised in that** the display arrangement (2) is operable, in the decoupled state, when positioned on a flat support (90).

21. A display device for a vehicle as claimed in at least one of the preceding claims, **characterised in that** the display arrangement (2) is constructed as a satellite receiver for an additional television device (91).

## Revendications

1. Dispositif de visualisation de véhicule (1) comportant un agencement de visualisation (2) et un dispositif de support (3) qui peut être fixé à une structure interne du véhicule, moyennant quoi l'agencement de visualisation (2) peut être accouplé de manière amovible à un agencement d'accouplement (4) du dispositif de support (3) et peut être utilisé séparément de celui-ci en position désaccouplée,
**caractérisé**
**en ce que** l'agencement de visualisation (2) peut être monté de manière amovible au dispositif de support (3) et est monté de manière pivotante dans une position d'accouplement (73) au dispositif de support (3).

2. Dispositif de visualisation de véhicule selon la revendication 1,
**caractérisé**
**en ce que** l'agencement de visualisation (2) peut être alimenté en données et/ou en énergie via le dispositif de support (3).

3. Dispositif de visualisation de véhicule selon l'une des revendications 1 ou 2,
**caractérisé**
**en ce que** le dispositif de support (3) peut être alimenté en données et/ou en énergie via une structure interne du véhicule en forme de barre, soit de préférence les entretoises (5) d'un appuie-tête.

4. Dispositif de visualisation de véhicule selon au moins l'une des revendications précédentes,
**caractérisé**
**en ce que** l'agencement de visualisation (2) peut être monté sur le dispositif de support (3) via une articulation d'appui en forme de rainure (16, 56).

5. Dispositif de visualisation de véhicule selon au moins l'une des revendications précédentes,
**caractérisé**
**en ce qu'**en position accouplée (73), une connexion enfichable amovible (21, 63) est pourvue entre l'agencement de visualisation (2) et le dispositif de support (3), ladite connexion exerçant une force d'accouplement de l'agencement de visualisation (2) au dispositif de support (3).

6. Dispositif de visualisation de véhicule selon au moins l'une des revendications précédentes,
**caractérisé**
**en ce qu'**au moins un élément de guidage (23, 65) est pourvu sur l'agencement de visualisation (2) et/ou le dispositif de support (3), grâce auquel l'accouplement de l'agencement de visualisation (2) sur le dispositif de support (3) peut être guidé au moins partiellement par sections.

7. Dispositif de visualisation de véhicule selon au moins l'une des revendications précédentes,
**caractérisé**
**en ce que** l'agencement de visualisation (2) et/ou le dispositif de support (3) comporte(nt) un dispositif de détachement (66) grâce auquel l'agencement de visualisation (2) est amovible au moins partiellement par sections de sa position d'accouplement (73).

8. Dispositif de visualisation de véhicule selon la revendication 7,
**caractérisé**
**en ce que** le dispositif de détachement (66) est conformé comme un levier, moyennant quoi le dispositif de détachement (66) peut être actionné par une première section de levier (67) et l'agencement de visualisation (2) en position d'accouplement (73) peut être détaché par une deuxième section de levier (68).

9. Dispositif de visualisation de véhicule selon au moins l'une des revendications précédentes,
**caractérisé**
**en ce que** l'agencement de visualisation (2) comporte un module de visualisation (24) et un module de base (25) qui sont connectés entre eux de manière pivotante (35) le long d'un côté commun (27).

10. Dispositif de visualisation de véhicule selon la revendication 9,
**caractérisé**
**en ce que** le module de visualisation (24) est agencé de manière étroitement adjacente au module de base (25) en position rabattue.

11. Dispositif de visualisation de véhicule selon la revendication 9 ou 10,
**caractérisé**
**en ce que** l'épaisseur (28, 29) du module de visualisation (24) et du module de base (25) en position rabattue parallèle l'un par rapport à l'autre est inférieure ou sensiblement égale au diamètre (30) de l'articulation (26).

12. Dispositif de visualisation de véhicule selon au moins l'une des revendications 9 à 11,
**caractérisé**
**en ce que** le module de base (25) se trouve en position rabattue au dos du module de visualisation (24) et forme un angle aigu ou sensiblement droit (31) avec le module de visualisation (24).

13. Dispositif de visualisation de véhicule selon au moins l'une des revendications 9 à 12,
**caractérisé**
**en ce qu'**au moins une connexion de casque audio (36) sensiblement coaxiale avec l'axe de pivotement (35) du module de visualisation (24) et du module de base (25) est pourvue du côté externe du boîtier.

14. Dispositif de visualisation de véhicule selon au moins l'une des revendications 9 à 13,
**caractérisé**
**en ce qu'**une commande de volume (38) sensiblement coaxiale avec l'axe de pivotement (35) du module de visualisation (24) et du module de base (25) est pourvue du côté externe du boîtier.

15. Dispositif de visualisation de véhicule selon au moins l'une des revendications précédentes,
**caractérisé**
**en ce qu'**au moins une antenne (41, 42) est pourvue, ladite antenne étant intégralement conformée avec l'agencement de visualisation (2) en position rétractée (44, 45) et faisant saillie dudit agencement en position déployée (46, 47).

16. Dispositif de visualisation de véhicule selon la revendication 15,
**caractérisé**
**en ce que** l'antenne peut pivoter entre la position rétractée (44, 45) et la position déployée (46, 47).

17. Dispositif de visualisation de véhicule selon l'une des revendications 15 ou 16,
**caractérisé**
**en ce que** l'antenne (41, 42) est amovible.

18. Dispositif de visualisation de véhicule selon au moins l'une des revendications 15 à 17,
**caractérisé**
**en ce qu'**une connexion pour une antenne externe est pourvue de manière sensiblement coaxiale avec un axe de pivotement (43) de l'antenne (41, 42).

19. Dispositif de visualisation de véhicule selon la revendication 18,
**caractérisé**
**en ce que** la connexion d'antenne est accessible lorsque l'antenne est démontée (41, 42).

20. Dispositif de visualisation de véhicule selon au moins l'une des revendications précédentes,
**caractérisé**
**en ce que** l'agencement de visualisation (2) peut être utilisé en position désaccouplée, posé sur un support plan (90).

21. Dispositif de visualisation de véhicule selon au moins l'une des revendications précédentes,
**caractérisé**
**en ce que** l'agencement de visualisation (2) est constitué comme un récepteur de satellite pour un téléviseur additionnel (91).
